# EUROPEAN PATENT SPECIFICATION

(11) **EP 1 800 443 B1**
(45) Date of publication and mention of the grant of the patent: **12.05.2010**
(21) Application number: 05800975.4
(22) Date of filing: 23.09.2005
(51) Int. Cl.: H04W 84/18

(54) **METHOD AND APPARATUS FOR IMPLEMENTATION OF AD HOC MESH NETWORK**
VERFAHREN UND VORRICHTUNG ZUR IMPLEMENTIERUNG EINES AD-HOC-MASCHENNETZWERKS
MÉTHODE ET APPAREIL POUR L'IMPLÉMENTATION D'UN RÉSEAU MAILLÉ AD-HOC

(30) Priority: 29.09.2004 US 954404
(43) Date of publication of application: 27.06.2007
(73) Proprietor: Kyocera Wireless Corp., San Diego, CA 92121 (US)
(72) Inventor: KALHAN, Amit, La Jolla, CA 92037 (US)
(74) Representative: Viering, Jentschura & Partner
(86) International application number: PCT/US2005/034052
(87) International publication number: WO 2006/039189

(56) References cited:
- EP-A- 1 134 939
- EP-A- 1 255 380
- EP-A- 1 454 474
- WO-A-96/13951
- WO-A-99/46899
- US-B1- 6 512 481

## Description

### FIELD

The present application relates to co-pending United States Patent Application No. US 2006/068822 A1 entitled METHOD AND APPARATUS FOR IMPLEMENTATION OF AD HOC MESH NETWORK, of concurrent ownership.

### BACKGROUND

Traditionally, wireless communication networks such as cellular networks are developed by dividing a desired coverage area into overlapping areas. Each area is served by a base station using a point-to-multipoint architecture. One of the problems with the traditional approach is the large costs associated with constructing the system. Typically these large costs are incurred before a customer base has been established to offset those costs. Traditional wireless communication networks may also be difficult to expand due to costs related to planning and coordinating the expansion. Base station resources may be limited. Additionally, in some cases where two mobile wireless communication devices can communicate directly less transmit power may be required than when communicating through a base station.

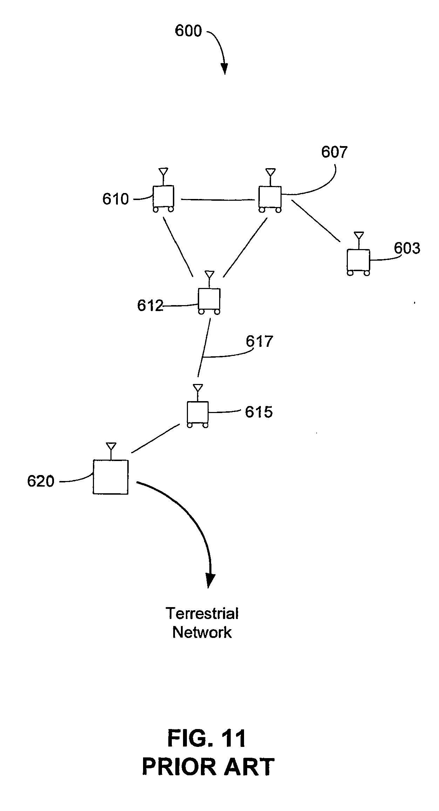

A solution to the shortcomings of traditional wireless communication networks is the use of mesh networks. In a mesh network several communication devices operate in a peer-to-peer fashion. An example of a mesh network is shown in FIG. 11, prior art. FIG. 11 is a diagram 600. The diagram 600 includes several mobile communication devices 603, 607, 610, 612, 615. The diagram also shows several communication connections, such as communication connection 617. A base station 620 connected to a terrestrial network is also shown. As shown in the diagram, the mobile communication device 603 has a communication convection with mobile communication device 607. Mobile communication device 607 is additionally connected to mobile communication devices 610 and 612, while mobile communication devices 610 and 612 are additionally connected to each other. Mobile communication device 612 is also connected to mobile communication device 615 by communications connection 617. Finally, the mobile communication device 615 is additionally connected to the base station 620.

Each of the mobile communication devices 603, 607, 610, 612, 615 and the base station 620 have the ability to relay communication signals between an originating device and a final destination. As an example, assume that mobile communication device 603 is sending a message to mobile communication device 615. Mobile communication device 603 can transmit to mobile communication device 607. Mobile communication device 607 can transmit to mobile communication device 612. Finally, mobile communication device 612 can transmit to mobile communication device 615, completing the sending of the message between mobile communication device 603 and 615. It will be clear to one of skill in the art that if the message discussed above needed to be sent over the terrestrial network then mobile communication device 615 could transmit the message to the base station 620 and the base station 620 could transmit the message to the terrestrial network.

Not all mesh networks include a base station. In some cases the mesh network may be used to communicate solely between mobile communication devices. Additionally, in some cases mesh networks may be set up between communication devices that are not mobile. The example shown in FIG. 11 is only one possible example. A mesh network has many advantages. A mesh network can help to solve problems associated with the economic burden of setting up a PMP. Additionally, mesh networks are typically easier to expand by simply adding more devices. Additional devices may have the advantage of creating more communications paths, such as the communication path 617 shown on FIG. 11. It will be clear that in some cases there may be a maximum number of communication devices, such as the mobile communication devices 603, 607, 610, 612, 615 shown in FIG 11.

In some cases network capacity may be increased. Specifically, in cases where lower power is used to communicate between multiple devices than would be required when the multiple devices communicate through a base station, the lower power used to transmit would typically lead to more devices being able to share scarce bandwidth resources.

While mesh networks have several advantages, typically relaying units within a mesh network are forced to delay any desired communication while relaying the communication of other parties. In many cases the relaying units only have a single transceiver. The transceiver may, in some cases, not be available to send and receive other communications when it is being used to relay a first communication signal. It would be advantageous to more efficiently use the limited number of transceivers in mobile communication devices.

Power is a limited resource, especially on mobile wireless devices that typically use battery power to function. Inefficient use of transmit power can lead to lower talk time or increase in interference with other users of the mesh network, or both. In many cases it may be more efficient to transmit directly between two mobile communication devices than to use a base station or multiple base stations to facilitate the transmission. Specifically, if the two mobile communication devices are close together it may be more efficient for the devices to communicate directly. An ad hoc network, in some cases, may operate more efficiently if a way to accurately predict when communication devices can communicate directly.

In an Ad hoc network it may be difficult to determine what communication devices are available for communication. Ad hoc networks may also be difficult to keep active in areas with few communication devices. Additionally, using a large number of "hops" to allow users to communicate is inefficient. It would be advantageous to find a way to predict what devices are available for communication, accurately predict future device connections in an ad hoc network, and use predictions to minimize the number of "hops" in an ad hoc network.

US 6 512 481 B1 discloses a wireless communication system using geographic position data, which employs directive antenna arrays and knowledge of position of users to form narrow antenna beams to and from desired users and away from undesired users to reduce co-channel interference.

WO 96/13951 A1 discloses methods and apparatus for detecting and predicting movement patterns of mobile radio transceivers, such as mobile cellular telephones.

### SUMMARY

The use of point-to-multipoint (PMP) communication systems typically has a significant economic burden associated with deploying the system. The costs of setting up base stations can, in some cases, be prohibitively expensive. While in many cases the costs are not prohibitively expensive, another possible problem is that expenses related to setting up the network may occur before revenue is being generated from customers' use of the network. One way that has been proposed to solve these problems is the use of mesh networks. In a mesh network a number of communication devices operate in an peer to peer "ad-hoc" fashion. Links between the communication devices are established where possible between communication devices and communication messages can be relayed-from one communication device to another.

The use of mesh networks does however have some problems. For example, when one or more communication devices are used to relay a communication message between two devices in the mesh network the relaying units within a mesh network are forced to delay any desired communication while relaying the communication of other parties.

The present invention solves these problems by providing a method of communicating between mobile wireless communication devices having the features described in independent claim 1, and by providing an add hoc mesh network for establishing communication between a plurality of devices having the features described in independent claim 9. Preferred embodiments of the present invention are described in the dependent claims.

By using current position or a prediction of future position the performance of a Ad-Hoc Mesh Network may, in many cases be improved. Current position and predictions of future position can be used to determine when to set up a communication channel between devices. Additionally, current position and predictions of future position can be used to determine what devices to set up communication channels with to provide a path between multiple communication devices that desire to communicate. Position can be determined by the use of a Global Positioning System (GPS) Receiver. The GPS Receiver uses signals received from Satellites to determine position. While GPS Receivers are a common device used to determine position, other devices are possible. GPS Receivers can generally also determine velocity and acceleration. Velocity and acceleration can be used to predict future position. The prediction can be used to determine when to set up communication channels between communication devices. The use of the prediction can be further improved when using devices that "know" the final destination. An example of such a device would include, but not be limited to automobile navigation systems that use internal maps and GPS Receivers to guide a driver to a final destination. The future location of a communication device may, in many cases, be much more accurately predicted when the final destination and route traveled are known, in addition to velocity and acceleration.

Use of information regarding position and velocity to attempt to predict future location information for communication devices in a mesh network has several advantages. A mesh network can help to solve problems associated with the economic burden of setting up a PMP communication system.

Further, the use of future location prediction can help to solve problems associated with movement of communication devices within the network. If two devices are predicted to be within range of each other in the future, in some cases communication between the two devices can be delayed until they can communicate with each other directly. By delaying the communication the need for a relay communication device is eliminated. This is, of course, only one specific case. As another example, in some cases interference between devices can be lowered by lowering the transmit power of transmitting devices. In these cases it may make sense to use a relay device so that transmit power can be lowered. Additionally, in cases when two communication devices are predicted to be closer together at a future time it may make sense to wait until devices are closer together so that transmit power can be lowered. This same idea can be extended to include more than two devices. As an example, if the current and future locations of three communication devices are known it may be possible to predict the best time for the devices to communicate. By using position information and predictions of future position the number of relay devices may, in some cases, be decreased. Additionally, in cases where transmit power is lowered talk time and standby time would typically be increased.

### BRIEF DESCRIPTION OF THE DRAWINGS

For a more complete understanding of the present invention, and the advantages thereof, reference is now made to the following descriptions taken in conjunction with the accompanying drawings, tables and attachments, in which:
FIG. 1 is a diagram that shows multiple mobile wireless communication devices in an ad hoc network.
FIG. 2 is a mobile wireless communication device.
FIG. 3A is a diagram that shows multiple mobile wireless communication devices in an ad hoc network in a series of first positions.
FIG. 3B is a diagram that shows multiple mobile wireless communication devices in an ad hoc network in a series of second positions.
FIG. 4 is a diagram that shows a mobile wireless communication device with multiple transmit power settings.
FIG. 5 is a diagram that shows two mobile wireless communication devices that are generally moving towards each other.
FIG. 6 is a diagram that shows three mobile wireless communication devices with two transmit power setting.
FIG. 7 is a diagram that shows a mobile wireless communication device that can transmit directionally.
FIG. 8 is a diagram that shows two mobile wireless communication devices that each have different transmit power levels.
FIG. 9 is a diagram that shows two mobile wireless communication devices traveling along a predetermined path to predetermined destinations.
FIG. 10 is a diagram that shows a mobile wireless communication device.
FIG. 11 is a diagram of an ad hoc network. (Prior Art)

### DETAILED DESCRIPTION

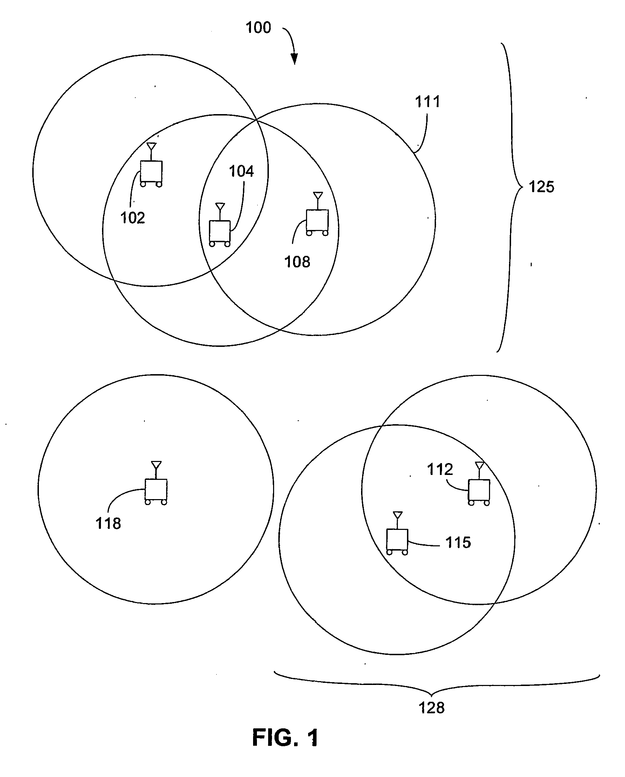

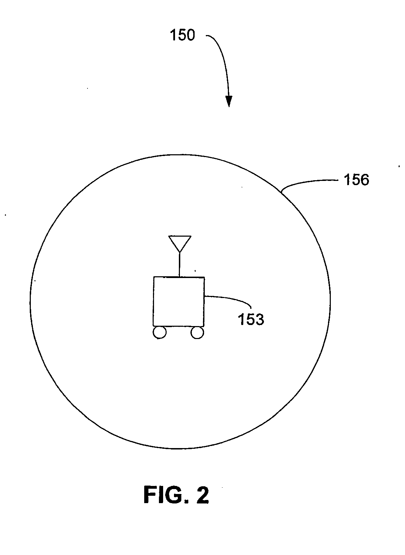

Referring now to FIG. 1 a diagram 100 that shows multiple mobile wireless communication devices in an ad hoc network will be discussed. The diagram 100 includes multiple mobile wireless communication devices 102, 104, 108, 112, 115, 118. Each of the multiple mobile wireless communication devices 102, 104, 108, 112, 115, 118 is shown enclosed by a circle. As an example, a circle 111 encloses the mobile wireless communication device 108. The circle 111 represents an area where mobile wireless communication devices can communicate. When another mobile wireless communication device is within the circle the mobile wireless communication devices can communicate with each other. Specifically, the circle represents the distance that the transmission of the mobile wireless communication device can be received. This will be discussed further with respect to FIG. 2.

The diagram 100 includes a first ad hoc network 125 and a second ad hoc network 128. The first ad hoc network 125 includes mobile wireless communication devices 102, 104, 108. The second ad hoc network includes mobile wireless communication devices 112,115. The mobile wireless communication device 118 is not part of an ad hoc network in the diagram 100.

In the first ad hoc network 125 each of the mobile wireless communication devices 102, 104, 108 can communicate. Mobile wireless communication device 102 can communicate directly with mobile wireless communication device 104. Mobile wireless communication device 104 can communicate directly with mobile wireless communication device 108. Mobile wireless communication devices 102 and 108 can communicate indirectly by using mobile wireless communication device 104. The second ad hoc network 128 contains two mobile wireless communication devices 112 and 115. Each of the mobile wireless communication devices can communicate with each other.

By using velocity and location information that can, for example, be determined using global positioning system (GPS) receivers predictions can be made to determine what mobile wireless communication devices can communicate now and at some future time. The mobile wireless communication devices 102, 104,108,112, 115,118 shown on the diagram 100 are typically moving. For this reason the devices that are able to communicate, such as the first ad hoc network 125 and the second ad hoc network 128 are typically constantly changing. The specific devices in an ad hoc network may change. An ad hoc network may cease to exist while a new ad hoc network may be created.

By using location and velocity information in conjunction with an ad hoc network advantages include the ability to use mobile wireless communication device resources more efficiently. For example, when two devices that need to communicate are predicted to be within range of each other in the future, in some cases the communication between the devices can be delayed until the devices can communicate directly, eliminating the need for a relay communication device.

Referring now to FIG. 2 another diagram 150 that shows a mobile wireless communication device 153 will now be discussed. The mobile wireless communication device 153 is the same or similar to the mobile wireless communication devices 102, 104, 108, 112, 115, 118. Additionally, the mobile wireless communication device 153 is shown enclosed by a circle 156. The circle 156 is the same or similar to the circle to the circle 111 shown in FIG. 1. It will be clear to one of skill in the art that by saying that the circles are the same or similar it is meant that the circles represent the same or similar concepts. Specifically, the distance that a mobile wireless communication device, in this case 153, can transmit a communication signal.

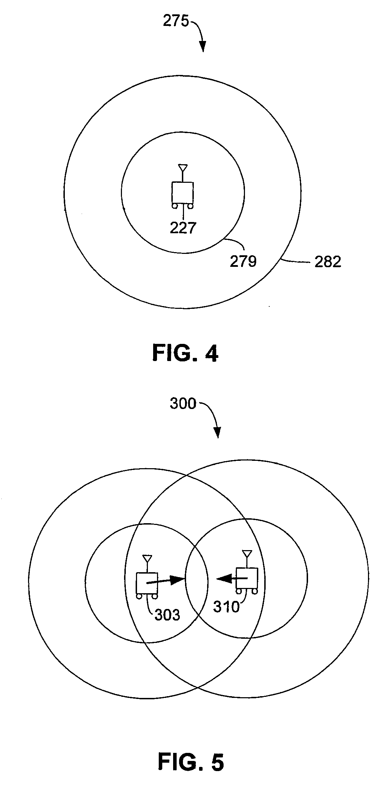

It is important to note that the circle 156 is only intended to be an example. The actual shape of the area may vary due to geographic features such as hills that may block a transmission. Other geographic features such as valleys and buildings may change the shape of the area. In many cases the area will not be a circle. Additionally, the area may vary based on the receiver. Some receivers may be able to receive a signal from farther away than others. The circle 156 is only intended to pictorially display a concept. Specifically, mobile wireless communication device transmissions typically can be received over a finite area. That area may vary based on several factors, such as, for example transmit power, geographic features, properties of the transmitter, properties of the receiver, as well as other factors. Differences in transmit power will be discussed further with respect to FIG. 4. Advantages of using a predictive ad hoc network may include, in some cases, lower interference with other communication devices due to the lower transmit power that may be used when device communication are delayed until times when the devices are predicted to be closer together.

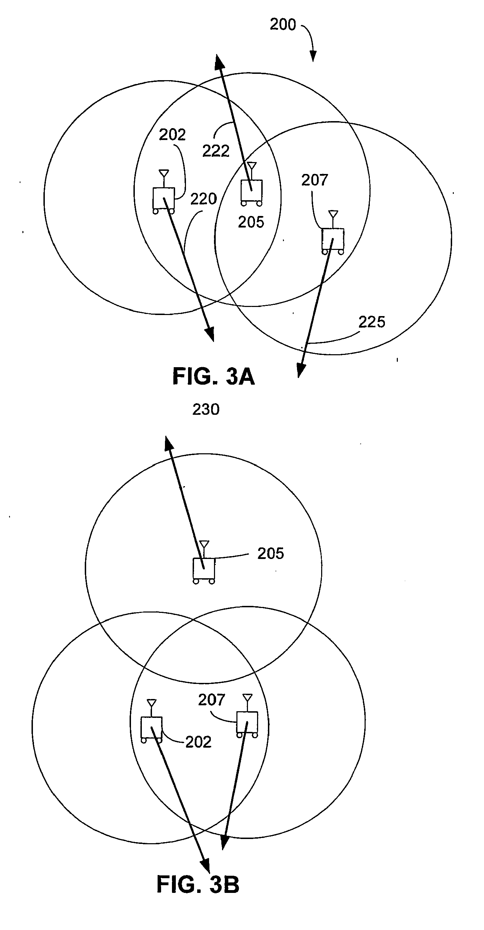

FIG 3A-B will now be discussed. FIG 3A shows a diagram 200. The diagram 200 includes mobile wireless communication devices 202, 205, and 207. The mobile wireless communication devices 202, 205, and 207 are the same or similar to the mobile wireless communication devices 102, 104, 108, 112,115, and 188 shown in FIG. 1. Additionally, the mobile wireless communication devices 202, 205, and 207 are the same or similar to the mobile wireless device 153 of FIG. 2. The mobile wireless communication devices 202, 205, 207 are shown moving, as indicated by the arrows 220, 222, and 225. The movement is further indicated by the change in position shown in FIG. 3B. In FIG. 3A mobile communication device 202 is not able to communicate directly with mobile communication device 207. However, it can be predicted that the devices 202, 207 may be able to communicate directly at a later time. The locations of the devices 202, 205, 207 at the later time are shown in FIG. 3B. As predicted the devices 202 and 207 can communicate directly.

FIG. 4 is a diagram 275 that shows a mobile wireless device 277. The mobile wireless device is enclosed in a first circle 279 that is indicative of a first transmit range and a second circle 282 that is indicative of a second transmit range. Typically the range of a mobile wireless device may be changed by increasing or decreasing transmit power. FIG. 4 generally shows a mobile wireless device 277 with two transmit power levels. Many more transmit power levels are possible. Typically mobile wireless communication devices have more than two transmit power level settings. Two are shown in FIG. 4 as a simplified example.

While the transmit range of the mobile wireless device 277 is typically effected by transmit power, other factors can have an effect on range. As an example, the type of antenna on the receiving mobile wireless device may change receiving mobile wireless device's ability to receive a signal transmitted from the transmitting mobile wireless device. The circles are used to generally describe the concept that mobile wireless communication devices have some finite range, however, that range is effected by many factors, including transmit power, and geography of the area, as well as other factors.

Advantages of using location to predict ad-hoc networks may, in some cases include, the ability to save battery power by predicting a future time when a lower power transmission can be used. It should be noted that while the term "battery power" is used in some cases other forms of mobile power source may be possible. Other mobile power sources may include, but are not limited to, mobile wireless communication devices that use a fuel cell. Additionally, another advantage, may in some cases include improved overall communication efficiency. In some cases this increased efficiency may be due to a decrease in interference with other users of a mesh network. The prediction discussed above will be discussed further with respect to FIG. 5 below.

Referring now to FIG. 5 a diagram 300 is shown. The diagram 300 shows two mobile wireless communication devices 303 and 310. The mobile wireless communication devices 303 and 310 are generally moving towards each other. As shown in the figure the mobile wireless deives 303 and 310 can communicate using the high transmit power setting. It can be seen from the diagram 300 that if the mobile wireless communication devices 303 and 310 continue to move towards each other as shown on the figure the mobile wireless communication devices 303 and 310 will be able to communicate using the low power setting at some point in time in the future.

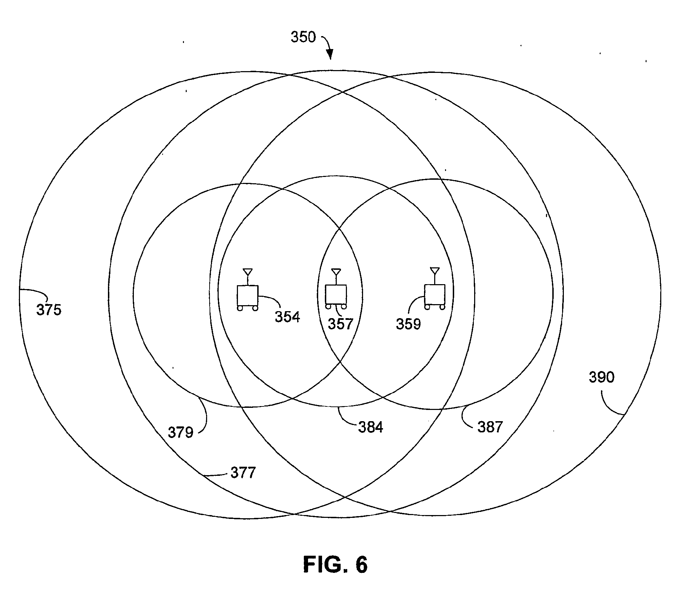

In some cases it may be advantageous to wait until the future time and transmit at the lower power setting. Several factors may be considered when trying to determine if a mobile transmission should be delayed. Some of these factors may include, the speed at which the mobile deices are approaching each other, how time critical the message to be transmitted is, and the probability that the prediction will be accurate. Several factors, or combinations of factors can be weighed to determine when to transmit a message. It will be understood that in some cases the directions of travel of the mobile wireless communication devices may change before the devices are close enough to use the low power settings. Referring now to FIG. 6 a diagram 350 will be shown. The diagram 350 includes three mobile wireless communication devices 354, 357, and 359. The mobile wireless communication devices 354, 357, and 359 include to power settings each as indicated by the circles 375, 377, 379, 384, 387, and 390.

As can be seen from the diagram 350 the mobile wireless device 354 can communicate directly with mobile wireless device 359 when the two mobile wireless communication devices transmit at the high transmit power level, shown by the circles 375 and 390. Alternatively, by using the mobile wireless device 357, the mobile wireless communication devices 354 and 359 can communicate while transmitting at the low power level, as indicated by the circles 379, 384, and 387.

In some cases it may be advantageous to transmit at the lower power level. Transmitting at the low power level may typically save battery power on the mobile wireless communication devices 354 and 359 and in some cases transmitting at lower power may decrease interference with other communication devices. Additionally, the mobile wireless communication devices 354 and 359 may in some cases cause less interference with other electronic transmissions when transmitting at lower power. When devices 354 and 359 are transmitting at the higher transmit power level, however, the mobile wireless device 357 may use less battery power. Additionally, the mobile wireless device 357 may be able to use its transmit and receive circuits to send and receive other transmissions.

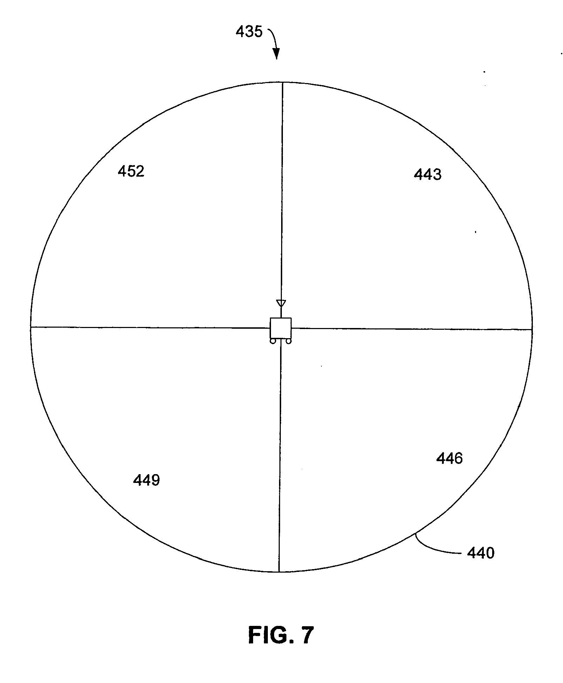

FIG. 7 is a diagram 435 that includes a mobile wireless device 438. The mobile wireless device is shown within a circle 440. The circle generally indicates the transmit range of the mobile wireless device 438. It will be understood that the circle only generally indicates the transmit range. The transmit range may be some shape other than a circle, and may vary in range based on many factors including geography, transmit power, transmit antenna type, and receive antenna type. The circle is meant to describe a general concept. The mobile wireless device 438 is able to send directional transmissions. As shown on the diagram 435 the mobile wireless device 438 can transmit in four different directions. 443, 446, 449, 452 By using a directional antenna the mobile wireless device may be able to transmit to specific mobile wireless communication devices and limit the amount of interference it causes to other mobile wireless communication devices that are not in the same area as the mobile wireless device that is being transmitted to. As an example, assume that a mobile wireless device is in the area 443 and another mobile wireless device is in the area 449. If the mobile wireless device 438 would like to transmit to the mobile wireless device in the area 443 it can transmit in the direction 443 while not transmitting in any of the other directions 446, 449, 452.

It will be understood that the diagram 435 is a simplification of a mobile wireless device including a directional antenna. While four different directions 443, 446, 449, 452 are shown, systems that have more directions of transmissions, or fewer directions are possible. Additionally it will be understood that electronic transmission devices that include directional antennas are generally known and understood. It is not the purpose of this application to describe any specific method or device that is capable of transmitting using a directional antenna, or any other method of transmitting directionally. The direction to transmit in using a mobile wireless device can, however, be predicted using the devices and methods described.

While the mobile wireless device 438 is shown as having a directional antenna, this is only one possible example. Both transmitting communication devices and receiving communication devices may in some cases benefit from a directional antenna. Additionally, in some cases a wireless device or devices in a wireless communication system may not be mobile wireless communication devices. The FIGS. are only possible examples. Other examples will be understood by those of skill in the art.

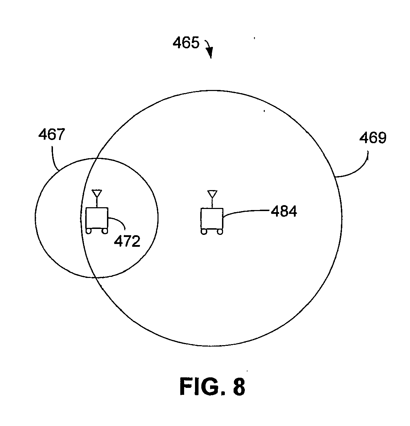

Referring now to FIG. 8 a diagram 475 will be discussed. The diagram 475 shows a first mobile communication device 482 and a second mobile communication device 484. The first mobile communication device 482 is enclosed in a first circle 477. The second mobile communication device 484 is enclosed in a second circle 479. In some cases a first mobile communication device 482 may be able to receive a transmission from a second mobile communication device 482 while the second mobile communication device 484 may not be able to receive a transmission from the first mobile communication device 482. For example, the second mobile communication device 484 may be able to transmit using more transmit power than the first mobile communication device 482. This is shown on the diagram 475. The first circle 477 is shown as a smaller circle than the second circle 479.

The size of the circle, as described with respect to FIGS. 4, 5, 6, and 8 generally shows range of the mobile wireless device. The circle may be indicative of transmit power as described, however, other factors may effect the range of the mobile wiresless device. Additionally, the range of the mobile wireless communication devices may be a function of multiple factors. Other factors that may affect the range of a mobile wireless device include, but are not limited to the geography of the local area, the transmit antenna of the transmitting device, and the receiving antenna of the receiving device.

While a circle has been used to generally indicate the range transmit range of a mobile wireless device, generally the shape of the transmit range of a mobile wireless device may not be a circle. The shape may vary in different direction due to geographic features, including hills, valleys, and buildings. The circles used in the figures are only intended to help describe a the concept that mobile wireless communication devices transmissions can typically only be received over background noise over some finite range, and within some finite area.

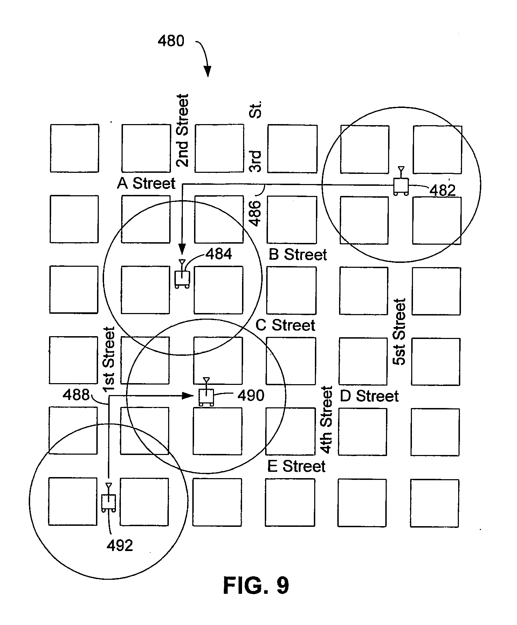

Referring now to FIG. 9 a diagram 480 will be discussed. Many automobiles, especially newer automobiles include a navigation system that assists the driver in finding a location, such as an address. These navigation systems typically use GPS satellites to determine location, and have internal mapping capabilities that determine a path of travel to a desired location. Many systems are built into automobiles, however, handheld systems are possible. Additionally, navigation systems can be built into other types of vehicles. It will be clear to those of skill in the art that the specific type of navigation system and the specific implementation may vary. Information from the navigation system can be used to predict when two mobile communication systems will be able to communicate.

The diagram 480 includes a mobile communication device in a first location 482. The mobile communication device travels along a first predetermined path 486 to a second location. The diagram 480 also includes a second mobile communication device in a third location 492. The second mobile communication device travels along a second predetermined path 488. As can be seen on the diagram when the first mobile communication device is in location 484 and the second mobile communication device is in location 490 the mobile wireless communication devices may be able to communicate. Navigation systems typically estimate when a vehicle will arrive at a location. If the mobile wireless communication devices arrive at locations 484 and 490 at the same or similar times the devices may be able to communicate. Locations 484 and 490 may be final destinations, however, the locations 484 and 490 could also be interim locations along a longer path of travel. It will be clear to those of skill in the art the mobile wireless communication devices may not stop at locations 484 and 490. Additionally, the mobile wireless communication devices may be able to communicate at other locations along the path of travel.

The navigation system, or some part of the navigation system may be part of the mobile communication device. As an example, the mobile communication device may include a GPS receiver and a circuit to determine location based on the GPS signals. The device may also include a map display and software to determine a path of travel to a location. Advantages may, in some cases include improved predictions of future locations by using navigation information.

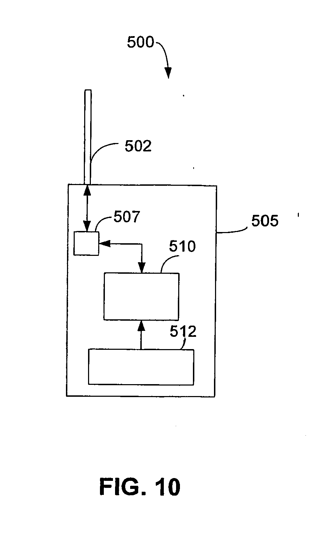

Referring now to FIG.10, a mobile handset 500 will be discussed. The mobile handset 500 includes an antenna 502. The antenna, 502 is shown external as an external antenna, however, other configurations are possible. The antenna 502 may be an internal antenna. Additionally, the antenna may be multiple antennas.

The handset also includes a transceiver 507. The transceiver is coupled to a processor. The processor may be a mobile station modem (MSM), a processor, microprocessor, or microcontroller. Additionally, the processor may be circuitry, such as discrete logic, or programmable logic device, such as a field programmable logic device (FPGA), or complex logic device (CPLD). The processor 510 is coupled to a mobile power source 512. The mobile power source 512 may be a battery or a fuel cell, additionally, other power sources are possible. FIG. 10 shows the mobile power source 512, processor 510, and transceiver 507 enclosed in a case 505. It will be understood, however, that the components that are enclosed in the case 505 may vary.

FIG. 10 is one possible example of a mobile communication device, however, other examples are possible. Advantages may include improved network performance. The improvement may occur when lower transmit power can be used, potentially allowing more mobile wireless communication devices to operate in a given geographic area.

Generally figures in this application are not drawn to scale and no scale should be implied. Additionally, while the FIGS. 1-10 show mobile wireless communication devices, it will be clear to one of skill in the art that in some cases one ore more base stations, or fixed wireless devices may be included. The scope of the invention is only limited by the claims.

## Claims

1. A method of communicating between mobile wireless communication devices comprising the steps of:
establishing communication between a first wireless communication device (202) and a second wireless communication device (207) of a plurality of devices (202, 205, 207) in an ad hoc mesh network (125, 128) in which each device of the plurality of devices (202,205, 207) can communicate with another device of the plurality of devices by one of direct communication and indirect communication through a chain of devices, wherein a first communication range of the first wireless communication device (202) does not overlap a second communication range of the second wireless communication device (207) such that communication between the first and second communication device utilizes at least a third wireless communication device (205) having a third communication range which overlaps the first communication range and the second communication range; the method **characterized in that** it comprises the steps of:
acquiring a position, direction, and speed (220) of the first wireless communication device (202);
acquiring a position, direction, and speed (225) of the second wireless communication device (207);
predicting whether the first wireless communication device (202) can communicate directly with the second wireless communication device (207) without a use of the third wireless communication device (205) based on the acquired positions, directions, and speeds of the first wireless communication device (202) and the second wireless communication device (207); and
determining whether to postpone communication between the first wireless communication device (202) and the second wireless communication device (207), based upon the prediction, until direct communication can be established between the first wireless communication device (202) and the second wireless communication device (207).

2. The method of claim 1, wherein the first mobile wireless communication device determines the position, direction, and speed of the second mobile wireless communication device from another communication device.

3. The method of claim 2, wherein the another communication device is the at least the third wireless communication device (205).

4. The method of claim 2, wherein the another communication device is a base station.

5. The method of claim 1, wherein the predicting step includes using a navigation device.

6. The method of claim 1, wherein the predicting step includes determining that the first mobile wireless communication device and the second mobile wireless communication device can communicate directly by transmitting at a high power setting.

7. The method of claim 1, wherein the predicting step includes determining that the first mobile wireless communication device and the second mobile wireless communication device will be able to communicate at a future time using a low transmit power.

8. The method of claim 7, wherein the first mobile wireless communication device and the second mobile wireless communication device communicate directly at the future time at the low transmit power.

9. An ad hoc mesh network (125) for establishing communication between a plurality of devices (202, 205, 207), comprising:
a first wireless communication device (202), a second wireless communication device (207) and at least a third communication device (205) of a plurality of devices (202, 205, 207), wherein each device of the plurality of devices (202, 205, 207) is arranged to communicate with another device of the plurality of devices by one of direct communication and indirect communication through a chain of devices, wherein a first communication range of the first wireless communication device (202) does not overlap a second communication range of the second wireless communication device (207) such that communication between the first and second communication device utilizes the at least the third wireless communication device (205) having a third communication range which overlaps the first communication range and the second communication range, **characterized by**
each wireless communication device of the plurality of devices (202, 205, 207) comprising:
a processor arranged for:
determining a location, direction, and speed of the each wireless communication device;
acquiring locations, directions, and speeds of other wireless communication devices within a communication range of the each wireless communication device in the add hoc mesh network; and
predicting, based on the first location, direction, and speed and the acquired locations, directions, and speeds, whether the each wireless communication device can communicate with one of the other wireless communication devices, and whether the other wireless communication devices can directly communicate with another of the other wireless communication devices;
based on the prediction, postponing communication between the each wireless communication device and one of the other wireless communication devices until direct communication can be established between the each wireless communication device and the one of the other wireless communication devices;
an antenna;
a transceiver connected to the antenna and to the processor;
a mobile power source configured to power the transceiver and the processor; and
a case enclosing the processor, the transceiver and the mobile power source.

10. The ad hoc mesh network (125) of claim 9, wherein the processor is arranged for:
predicting that the each wireless communication device may be able to communicate with one of the other wireless communication devices using a high transmit power level at a determined time; and
causing the transceiver to transmit to the one of the other wireless communication devices at the determined time.

11. The ad hoc mesh network (125) of claim wherein the processor is arranged for:
predicting that the each wireless communication device may be able to communicate with one of the other wireless communication devices using a low transmit power level at a determined time; and
causing the transceiver to transmit to the one of the other wireless communication devices at the determined time.

12. The ad hoc mesh network (125) of claim 9, wherein the processor is arranged for:
predicting that the each wireless communication device may be able to communicate with one of the other wireless communication devices by transmitting in a specific direction; and
causing the transceiver to transmit to the one of the other wireless communication devices in the specific direction.

13. The ad hoc mesh network (125) of claim 9, wherein the processor is arranged for:
predicting that the each wireless communication device may be able to communicate with one of the other wireless communication devices at a determined time using information from a navigation device; and
causing the transceiver to transmit to the one of the other wireless communication devices at the determined time.

14. The ad hoc mesh network (125) of claim 13, wherein the navigation device is internal to the each wireless communication device

15. The ad hoc mesh network (125) of claim 9, wherein the processor is arranged for:
predicting that the each wireless communication device may be able to communicate with one of the other wireless communication devices using a low transmit power level at a determined time by communicating through at least one additional mobile wireless communication device; and
causing the transceiver to transmit at low power at the determined time to the at least one additional mobile wireless communication device.

16. The ad hoc mesh network (125) of claim 9, wherein the processor is arranged for
predicting that the each wireless communication device may be able to communicate with one of the other wireless communication devices using a low transmit power level at a determined time by communicating through at least one additional mobile wireless communication device;
predicting that the each wireless communication device may be able to communicate with one of the other wireless communication devices using a high transmit power level at the determined time; and
causing the transceiver to transmit at the high power to the one of the other wireless communication devices at the determined time without using the at least one additional mobile wireless communication device.

## Patentansprüche

1. Ein Verfahren zum Kommunizieren zwischen mobilen drahtlosen Kommunikationsvorrichtungen, die folgenden Schritte aufweisend:
Herstellen einer Kommunikation zwischen einer ersten drahtlosen Kommunikationsvorrichtung (202) und einer zweiten drahtlosen Kommunikationsvorrichtung (207) einer Mehrzahl von Vorrichtungen (202, 205, 207) in einem Ad-hoc-Mesh-Netzwerk (125, 128), in dem jede Vorrichtung der Mehrzahl von Vorrichtungen (202, 205, 207) mittels einer von einer direkten Kommunikation und einer indirekten Kommunikation durch eine Kette von Vorrichtungen mit einer anderen Vorrichtung der Mehrzahl von Vorrichtungen kommunizieren kann, wobei ein erster Kommunikationsbereich der ersten drahtlosen Kommunikationsvorrichtung (202) nicht mit einem zweiten Kommunikationsbereich der zweiten drahtlosen Kommunikationsvorrichtung (207) überlappt ist, so dass die Kommunikation zwischen der ersten Kommunikationsvorrichtung und der zweiten Kommunikationsvorrichtung mindestens eine dritte drahtlose Kommunikationsvorrichtung (205) nutzt, die einen dritten Kommunikationsbereich aufweist, der mit dem ersten Kommunikationsbereich und mit dem zweiten Kommunikationsbereich überlappt ist, wobei das Verfahren **dadurch gekennzeichnet ist, dass** es die folgenden Schritte aufweist:
Erfassen einer Position, Richtung und Geschwindigkeit (220) der ersten drahtlosen Kommunikationsvorrichtung (202),
Erfassen einer Position, Richtung und Geschwindigkeit (225) der zweiten drahtlosen Kommunikationsvorrichtung (207),
Voraussagen auf der Grundlage der erfassten Positionen, Richtungen und Geschwindigkeiten der ersten drahtlosen Kommunikationsvorrichtung (202) und der zweiten drahtlosen Kommunikationsvorrichtung (207), ob die erste drahtlose Kommunikationsvorrichtung (202) ohne eine Nutzung der dritten drahtlosen Kommunikationsvorrichtung (205) direkt mit der zweiten drahtlosen Kommunikationsvorriehtung (207) kommunizieren kann, und
Bestimmen auf der Grundlage der Vorhersage, ob die Kommunikation zwischen der ersten drahtlosen Kommunikationsvorrichtung (202) und der zweiten drahtlosen Kommunikationsvorrichtung (207) hinausgezögert werden soll, bis eine direkte Kommunikation zwischen der ersten drahtlosen Kommunikationsvorrichtung (202) und der zweiten drahtlosen Kommunikationsvorrichtung (207) hergestellt werden kann.

2. Das Verfahren gemäß Anspruch 1, wobei die erste mobile drahtlose Kommunikationsvorrichtung die Position, Richtung und Geschwindigkeit der zweiten mobilen drahtlosen Kommunikationsvorrichtung von einer anderen Kommunikationsvorrichtung aus ermittelt.

3. Das Verfahren gemäß Anspruch 2, wobei die andere Kommunikationsvorrichtung die mindestens dritte drahtlose Kommunikationsvorriehtung (205) ist.

4. Das Verfahren gemäß Anspruch 2, wobei die andere Kommunikationsvorrichtung eine Basisstation ist.

5. Das Verfahren gemäß Anspruch 1, wobei der Schritt des Voraussagens die Verwendung einer Navigationsvorrichtung einschließt.

6. Das Verfahren gemäß Anspruch 1, wobei der Schritt des Voraussagens das Bestimmen dessen einschließt, dass die erste mobile drahtlose Kommunikationsvorrichtung und die zweite mobile drahtlose Kommunikationsvorrichtung direkt durch Übertragen mit einer Hochleistungseinstellung kommunizieren können.

7. Das Verfahren gemäß Anspruch 1, wobei der Schritt des Voraussagens das Bestimmen dessen einschließt, dass die erste mobile drahtlose Kommunikationsvorrichtung und die zweite mobile drahtlose Kommunikationsvorrichtung zu einem zukünftigen Zeitpunkt mittels einer niedrigen Übertragungsleistung kommunizieren werden können.

8. Das Verfahren gemäß Anspruch 7, wobei die erste mobile drahtlose Kommunikationsvorrichtung und die zweite mobile drahtlose Kommunikationsvorrichtung zu dem zukünftigen Zeitpunkt mit der niedrigen Übertragungsleistung direkt miteinander kommunizieren.

9. Ein Ad-hoc-Mesh-Netzwerk (125) zum Herstellen einer Kommunikation zwischen einer Mehrzahl von Vorrichtungen (202, 205, 207), aufweisend:
eine erste drahtlose Kommunikationsvorrichtung (202), eine zweite drahtlose Kommunikationsvorrichtung (207) und mindestens eine dritte drahtlose Kommunikationsvorrichtung (205) einer Mehrzahl von Vorrichtungen (202, 205, 207), wobei jede Vorrichtung der Mehrzahl von Vorrichtungen (202, 205, 207) zum Kommunizieren mit einer anderen Vorrichtung aus der Mehrzahl von Vorrichtungen mittels einer von einer direkten Kommunikation und einer indirekten Kommunikation durch eine Kette von Vorrichtungen geeignet ist, wobei ein erster Kommunikationsbereich der ersten drahtlosen Kommunikationsvorrichtung (202) nicht mit einem zweiten Kommunikationsbereich der zweiten drahtlosen Kommunikationsvorrichtung (207) überlappt ist, so dass die Kommunikation zwischen der ersten Kommunikationsvorrichtung und der zweiten Kommunikationsvorrichtung die mindestens dritte drahtlose Kommunikationsvorrichtung (205) nutzt, die einen dritten Kommunikationsbereich aufweist, der mit dem ersten Kommunikationsbereich und mit dem zweiten Kommunikationsbereich überlappt ist, **dadurch gekennzeichnet,**
**dass** jede drahtlose Kommunikationsvorrichtung der Mehrzahl von Vorrichtungen (202, 205, 207) aufweist:
einen Prozessor, der vorgesehen ist
zum Ermitteln einer Position, Richtung und Geschwindigkeit von jeder drahtlosen Kommunikationsvorrichtung,
zum Erfassen von Positionen, Richtungen und Geschwindigkeiten anderer drahtloser Kommunikationsvorrichtungen innerhalb eines Kommunikationsbereichs von jeder drahtlosen Kommunikationsvorrichtung in dem Ad-hoc-Mesh-Netzwerk, und
zum Vorhersagen auf der Grundlage der ersten Position, Richtung und Geschwindigkeit und der erfassten Positionen, Richtungen und Geschwindigkeiten, ob jede drahtlose Kommunikationsvorrichtung mit einer der anderen drahtlosen Kommunikationsvorrichtungen kommunizieren kann und ob die anderen drahtlosen Kommunikationsvorrichtungen direkt mit einer anderen der anderen drahtlosen Kommunikationsvorrichtungen kommunizieren können,
und, basierend auf der Voraussage, zum Hinauszögern der Kommunikation zwischen jeder drahtlosen Kommunikationsvorrichtung und einer der anderen drahtlosen Kommunikationsvorrichtungen, bis eine direkte Kommunikation zwischen jeder drahtlosen Kommunikationsvorrichtung und der einen der anderen drahtlosen Kommunikationsvorrichtungen hergestellt werden kann,
eine Antenne,
einen Transceiver, der mit der Antenne und mit dem Prozessor verbunden ist,
eine mobile Energiequelle, die eingerichtet ist zum Versorgen des Transceivers und des Prozessors mit Energie, und
ein Gehäuse, das den Prozessor, den Transceiver und die mobile Leistungsquelle umschließt.

10. Das Ad-hoc-Mesh-Netzwerk (125) gemäß Anspruch 9, wobei der Prozessor eingerichtet ist
zum vorhersagen, dass jede drahtlose Kommunikationsvorrichtung zum Kommunizieren mit einer der anderen drahtlosen Kommunikationsvorrichtungen mittels eines hohen Übertragungsleistungspegels zu einem bestimmten Zeitpunkt geeignet sein kann, und
zum Bewirken dessen, dass der Transceiver zu dem bestimmten Zeitpunkt an die eine der anderen drahtlosen Kommunikationsvorrichtungen sendet.

11. Das Ad-hoc-Mesh-Netzwerk (125) gemäß Anspruch 9, wobei der Prozessor eingerichtet ist
zum Vorhersagen, dass jede drahtlose Kommunikationsvorrichtung zu einem bestimmten Zeitpunkt mit einer der anderen drahtlosen Kommunikationsvorrichtungen mittels eines niedrigen Übertragungsleistungspegel kommunizieren kann, und
zum Bewirken dessen, dass der Transceiver zu dem bestimmten Zeitpunkt an die eine der anderen drahtlosen Kommunikationsvorrichtungen sendet.

12. Das Ad-hoc-Mesh-Netzwerk (125) gemäß Anspruch 9, wobei der Prozessor eingerichtet ist
zum Vorhersagen, dass jede drahtlose Kommunikationsvorrichtung durch Senden in einer bestimmten Richtung mit einer der anderen drahtlosen Kommunikationsvorrichtungen kommunizieren kann, und
zum Bewirken dessen, dass der Transceiver in der bestimmten Richtung an die eine der anderen drahtlosen Kommunikationsvorrichtungen sendet.

13. Das Ad-hoc-Mesh-Netzwerk (125) gemäß Anspruch 9, wobei der Prozessor eingerichtet ist
zum Vorhersagen, dass jede drahtlose Kommunikationavorrichtung zu einem bestimmten zeitpunkt mittels Informationen aus einer Navigationsvorrichtung mit einer der anderen drahtlosen Kommunikationsvorrichtungen kommunizieren kann, und
zum Bewirken dessen, dass der Transceiver zu dem bestimmten Zeitpunkt an die eine der anderen drahtlosen Kommunikationsvorrichtungen sendet.

14. Das Ad-hoc-Mesh-Netzwerk (125) gemäß Anspruch 13, wobei die Navigationsvorrichtung innerhalb jeder drahtlosen Kommunikationsvorrichtung vorgesehen ist.

15. Das Ad-hoc-Mesh-Netzwerk (125) gemäß Anspruch 9, wobei der Prozessor eingerichtet ist
zum Vorhersagen, dass jede drahtlose Kommunikationsvorrichtung mit einer der anderen drahtlosen Kommunikationsvorrichtungen mittels eines niedrigen Übertragungsleistungspegels zu einem bestimmten Zeitpunkt durch Kommunizieren durch mindestens eine zusätzliche mobile drahtlose Kommunikationsvorrichtung kommunizieren kann, und
zum Bewirken dessen, dass der Transceiver zu dem bestimmten Zeitpunkt an die mindestens eine zusätzliche mobile drahtlose Kommunikationsvorrichtung mit niedriger Leistung sendet.

16. Das Ad-hoc-Mesh-Netzwerk (125) gemäß Anspruch 9, wobei der Prozessor eingerichtet ist
zum Vorhersagen, dass jede drahtlose Kommunikationsvorrichtung mit einer der anderen drahtlosen Kommunikationsvorrichtungen mittels eines geringen Übertragungsleistungspegels zu einem bestimmten Zeitpunkt durch Kommunizieren durch mindestens eine zusätzliche mobile drahtlose Kommunikationsvorrichtung kommunizieren kann,
zum Vorhersagen, dass jede drahtlose Kommunikationsvorrichtung mit einer der anderen drahtlosen Kommunikationsvorrichtungen mittels eines hohen Übertragungsleistungspegels zu dem bestimmten Zeitpunkt kommunizieren kann, und
zum Bewirken dessen, dass der Transceiver zu dem bestimmten Zeitpunkt mit der hohen Leistung an die eine der anderen drahtlosen Kommunikationsvorrichtungen sendet, ohne die mindestens eine zusätzliche mobile drahtlose Kommunikationsvorrichtung zu nutzen.

## Revendications

1. Procédé de communication entre des dispositifs de communication sans fil mobiles comprenant les étapes consistant à :
établir une communication entre un premier dispositif de communication sans fil (202) et un deuxième dispositif de communication sans fil (207) d'une pluralité de dispositifs (202, 205, 207) dans un réseau maillé ad hoc (125, 128) dans lequel chaque dispositif de la pluralité de dispositifs (202, 205, 207) peut communiquer avec un autre dispositif de la pluralité de dispositifs par l'une d'une communication directe et d'une communication indirecte par l'intermédiaire d'une chaîne de dispositifs, dans lequel une première portée de communication du premier dispositif de communication sans fil (202) ne chevauche pas une deuxième portée de communication du deuxième dispositif de communication sans fil (207) de telle sorte qu'une communication entre les premier et deuxième dispositifs de communication fasse appel à au moins un troisième dispositif de communication sans fil (205) qui présente une troisième portée de communication qui chevauche la première portée de communication et la deuxième portée de communication ; le procédé étant **caractérisé en ce qu'**il comprend les étapes consistant à :
acquérir une position, une direction et une vitesse (220) du premier dispositif de communication sans fil (202) ;
acquérir une position, une direction et une vitesse (225) du deuxième dispositif de communication sans fil (207) ;
prévoir si le premier dispositif de communication sans fil (202) peut communiquer directement avec le deuxième dispositif de communication sans fil (207) sans faire appel au troisième dispositif de communication sans fil (205) sur la base des positions, des directions et des vitesses acquises du premier dispositif de communication sans fil (202) et du deuxième dispositif de communication sans fil (207) ; et
déterminer s'il convient de remettre à plus tard la communication entre le premier dispositif de communication sans fil (202) et le deuxième dispositif de communication sans fil (207), sur la base de la prévision, jusqu'à ce qu'une communication directe puisse être établie entre le premier dispositif de communication sans fil (202) et le deuxième dispositif de communication sans fil (207).

2. Procédé selon la revendication 1, dans lequel le premier dispositif de communication sans fil mobile détermine la position, la direction et la vitesse du deuxième dispositif de communication sans fil mobile à partir d'un autre dispositif de communication.

3. Procédé selon la revendication 2, dans lequel l'autre dispositif de communication est l'au moins un troisième dispositif de communication sans fil (205).

4. Procédé selon la revendication 2, dans lequel l'autre dispositif de communication est une station de base.

5. Procédé selon la revendication 1, dans lequel l'étape de prévision comprend l'utilisation d'un dispositif de navigation.

6. Procédé selon la revendication 1, dans lequel l'étape de prévision comprend une étape consistant à déterminer si le premier dispositif de communication sans fil mobile et le deuxième dispositif de communication sans fil mobile peuvent communiquer directement en émettant selon un réglage de puissance élevée.

7. Procédé selon la revendication 1, dans lequel l'étape de prévision comprend une étape consistant à déterminer si le premier dispositif de communication sans fil mobile et le deuxième dispositif de communication sans fil mobile pourront communiquer par la suite en utilisant une puissance d'émission faible.

8. Procédé selon la revendication 7, dans lequel le premier dispositif de communication sans fil mobile et le deuxième dispositif de communication sans fil mobile communiquent directement par la suite à la puissance d'émission faible.

9. Réseau maillé ad hoc (125) destiné à établir une communication entre une pluralité de dispositifs (202, 205, 207), comprenant :
un premier dispositif de communication sans fil (202), un deuxième dispositif de communication sans fil (207) et au moins un troisième dispositif de communication (205) d'une pluralité de dispositifs (202, 205, 207), dans lequel chaque dispositif de la pluralité de dispositifs (202, 205, 207) est agencé de manière à communiquer avec un autre dispositif de la pluralité de dispositifs par l'une d'une communication directe et d'une communication indirecte par l'intermédiaire d'une chaîne de dispositifs, dans lequel une première portée de communication du premier dispositif de communication sans fil (202) ne chevauche pas une deuxième portée de communication du deuxième dispositif de communication sans fil (207) de telle sorte qu'une communication entre les premier et deuxième dispositifs de communication fasse appel à au moins un troisième dispositif de communication sans fil (205) qui présente une troisième portée de communication qui chevauche la première portée de communication et la deuxième portée de communication, **caractérisé par le fait que** ;
chaque dispositif de communication sans fil de la pluralité de dispositifs (202, 205, 207) comprend :
un processeur agencé de manière à :
déterminer un emplacement, une direction et une vitesse de chaque dispositif de communication sans fil ;
acquérir les emplacements, les directions et les vitesses d'autres dispositifs de communication sans fil à l'intérieur de la portée de communication de chaque dispositif de communication sans fil dans le réseau maillé ad hoc ; et
prévoir, sur la base des premiers remplacement, direction et vitesse et des emplacements, des directions et des vitesses acquis, si chaque dispositif de communication sans fil peut communiquer avec l'un des autres dispositifs de communication sans fil, et si les autres dispositifs de communication sans fil peuvent communiquer directement avec un autre des autres dispositifs de communication sans fil ;
sur la base de la prévision, remettre à plus tard une communication entre chaque dispositif de communication sans fil et l'un des autres dispositifs de communication sans fil jusqu'à ce qu'une communication directe puisse être établie entre chaque dispositif de communication sans fil et celui des autres dispositifs de communication sans fil ;
une antenne ;
un émetteur récepteur connecté à l'antenne et au processeur ;
une source d'alimentation mobile configurée de manière à alimenter l'émetteur récepteur et le processeur ; et
un boîtier qui renferme le processeur, l'émetteur récepteur et la source d'alimentation mobile.

10. Réseau maillé ad hoc (125) selon la revendication 9, dans lequel le processeur est agencé de manière à :
prévoir si chaque dispositif de communication sans fil peut communiquer avec l'un des autres dispositifs de communication sans fil en faisant appel à un niveau de puissance d'émission élevée à un instant déterminé ; et
faire en sorte que l'émetteur récepteur émette vers l'un des autres dispositifs de communication sans fil à l'instant déterminé.

11. Réseau maillé ad hoc (125) selon la revendication 9, dans lequel le processeur est agencé de manière à :
prévoir si chaque dispositif de communication sans fil peut communiquer avec l'un des autres dispositifs de communication sans fil en faisant appel à un niveau de puissance d'émission faible à un instant déterminé ; et
faire en sorte que l'émetteur récepteur émette vers l'un des autres dispositifs de communication sans fil à l'instant déterminé.

12. Réseau maillé ad hoc (125) selon la revendication 9, dans lequel le processeur est agencé de manière à :
prévoir si chaque dispositif de communication sans fil peut communiquer avec l'un des autres dispositifs de communication sans fil en émettant dans une direction spécifique ; et
faire en sorte que l'émetteur récepteur émette vers l'un des autres dispositifs de communication sans fil dans la direction spécifique.

13. Réseau maillé ad hoc (125) selon la revendication 9, dans lequel le processeur est agencé de manière à :
prévoir si chaque dispositif de communication sans fil peut communiquer avec l'un des autres dispositifs de communication sans fil à un instant déterminé en faisant appel à des informations en provenance d'un dispositif de navigation ; et
faire en sorte que l'émetteur récepteur émette vers l'un des autres dispositifs de communication sans fil à l'instant déterminé.

14. Réseau maillé ad hoc (125) selon la revendication 13, dans lequel le dispositif de navigation est interne à chaque dispositif de communication sans fil.

15. Réseau maillé ad hoc (125) selon la revendication 9, dans lequel le processeur est agencé de manière à :
prévoir si chaque dispositif de communication sans fil peut communiquer avec l'un des autres dispositifs de communication sans fil en faisant appel à un niveau de puissance d'émission faible à un instant déterminé en communiquant par l'intermédiaire d'au moins un autre dispositif de communication sans fil mobile ; et
faire en sorte que l'émetteur récepteur émette à faible puissance à l'instant déterminé vers l'au moins un autre dispositif de communication sans fil mobile.

16. Réseau maillé ad hoc (125) selon la revendication 9, dans lequel le processeur est agencé de manière à :
prévoir si chaque dispositif de communication sans fil peut communiquer avec l'un des autres dispositifs de communication sans fil en faisant appel à un niveau de puissance d'émission faible à un instant déterminé en communiquant par l'intermédiaire d'au moins un autre dispositif de communication sans fil mobile ;
prévoir si chaque dispositif de communication sans fil peut communiquer avec l'un des autres dispositifs de communication sans fil en faisant appel à un niveau de puissance d'émission élevée à l'instant déterminé ; et
faire en sorte que l'émetteur récepteur émette à la puissance élevée vers l'un des autres dispositifs de communication sans fil à l'instant déterminé sans faire appel à l'au moins un autre dispositif de communication sans fil mobile.
